# EUROPÄISCHE PATENTSCHRIFT

(11) **EP 3 547 244 B1**
(45) Veröffentlichungstag und Bekanntmachung des Hinweises auf die Patenterteilung: **11.05.2022**
(21) Anmeldenummer: 19161433.8
(22) Anmeldetag: 07.03.2019
(51) Int. Cl.: G06Q 30/02, G09F 9/30

(54) **VERFAHREN, VORRICHTUNG UND COMPUTERLESBARES SPEICHERMEDIUM MIT INSTRUKTIONEN ZUM BEREITSTELLEN VON INHALTEN ZUR ANZEIGE FÜR EINEN INSASSEN EINES KRAFTFAHRZEUGS**
METHOD, DEVICE AND COMPUTER READABLE STORAGE MEDIUM WITH INSTRUCTIONS FOR PROVIDING CONTENT FOR DISPLAY FOR A PASSENGER OF A MOTOR VEHICLE
PROCÉDÉ, DISPOSITIF ET SUPPORT D'ENREGISTREMENT LISIBLE PAR ORDINATEUR DOTÉ D'INSTRUCTIONS PERMETTANT DE FOURNIR DES CONTENUS DESTINÉS À L'AFFICHAGE POUR UN PASSAGER D'UN VÉHICULE AUTOMOBILE

(30) Priorität: 29.03.2018 DE 102018204941
(43) Veröffentlichungstag der Anmeldung: 02.10.2019
(73) Patentinhaber: VOLKSWAGEN AKTIENGESELLSCHAFT, 38440 Wolfsburg (DE)
(72) Erfinder: Rössler, Bernd, 38524 Sassenburg (DE); Kwasny, Julia, 38448 Wolfsburg (DE); Bruns, Christian, 38104 Braunschweig (DE)

(56) Entgegenhaltungen:
- EP-A1- 2 450 845
- EP-A2- 2 420 964
- WO-A1-2019/020564
- DE-A1-102011 082 403
- DE-A1-102014 109 079
- JP-A- 2007 249 567
- US-A1- 2012 054 028

## Beschreibung

Verfahren, Vorrichtung und computerlesbares Speichermedium mit Instruktionen zum Bereitstellen von Inhalten zur Anzeige für einen Insassen eines Kraftfahrzeugs Die vorliegende Erfindung betrifft ein Verfahren, eine Vorrichtung und ein computerlesbares Speichermedium mit Instruktionen zum Bereitstellen von Inhalten zur Anzeige für einen Insassen eines Kraftfahrzeugs. Die Erfindung kann in Verbindung mit einem Kraftfahrzeug genutzt werden.

Wurde Außenwerbung bislang überwiegend durch (beleuchtete) Posterwände, Plakatwände oder Litfaßsäulen vermittelt, so halten seit einigen Jahren zunehmend digitale Werbeträger Einzug in die Außenwerbung. Bei digitalen Werbeträgern werden Anzeigevorrichtungen genutzt, die auf Basis von digitalen Daten wechselnde Bilder, Animationen oder Videosequenzen wiedergeben. Beispiele für verwendete Anzeigevorrichtungen sind Großbildschirme (Videoboards) oder Projektoren für die Projektion von Inhalten auf Hauswände oder spezielle Projektionsflächen. Aufgrund der Möglichkeit, die angezeigten Inhalte individuell anzupassen, stellt sich die Frage, wie ermittelt werden kann, welche Inhalte zu einem bestimmten Zeitpunkt angezeigt werden sollen.

Vor diesem Hintergrund beschreibt die EP 2 219 162 A1 ein Verfahren zur personalisierten Werbung gemäß dem Interesse eines Benutzers eines mobilen elektronischen Geräts. Das mobile elektronische Gerät überträgt ein Anforderungsprofil eines Endnutzers über ein drahtloses Datennetz an einen Datenserver. Weiterhin werden die Positionsdaten des Geräts an den Server übertragen. Im Server sind zudem Angebotsprofile von Werbekunden gespeichert. Kommt der Endbenutzer in die Nähe eines Werbebildschirms, so ermittelt der Server die Korrelation zwischen dem Anforderungsprofil und den Angebotsprofilen. Auf dem Werbebildschirm wird daraufhin Werbung angezeigt, die dem Anforderungsprofil des Endbenutzers am besten entspricht.

Die DE 10 2012 213 466 A1 beschreibt ein Verfahren zum Überwachen eines Fahrzeuginsassen. Mittels einer Umfelderfassungseinrichtung werden mehrere Objekte eines Fahrzeugumfelds erfasst. Ferner wird eine Blickrichtung des Fahrzeuginsassen mittels einer Blickerfassungseinrichtung erfasst. Es findet dann ein automatisches Zuordnen der erfassten Blickrichtung zu einem der erfassten Objekte mittels einer Zuordnungseinrichtung für eine Bestimmung dahingehend statt, welches Objekt der mehreren Objekte sich der Fahrzeuginsasse angesehen hat. Diese Informationen können an einen Cloud-Server übermittelt werden.

Es ist eine Aufgabe der Erfindung, Lösungen zum Bereitstellen von Inhalten zur Anzeige für einen Insassen eines Kraftfahrzeugs aufzuzeigen, die die Anzeige von Inhalten mit einer größeren Relevanz für den Insassen ermöglichen.

DE 10 2011 082 403 A1 beschreibt eine Vorrichtung zum Betreiben einer an einer Straße angeordneten Anzeigeeinrichtung. Die Vorrichtung umfasst eine Ermittlungseinrichtung zum Ermitteln, wann ein Fahrzeug sich in einen Sichtbereich der Anzeigeeinrichtung bewegt, und eine Steuerung zum Steuern der Anzeigeeinrichtung abhängig von einem Ergebnis der Ermittlung. Die Steuerung kann die Anzeigeeinrichtung abhängig von personenbezogenen Informationen steuern. Zudem kann eine geplante Fahrtroute des Fahrzeugs von dem Fahrzeug an die Ermittlungseinrichtung gesendet werden.

Weitere Verfahren zum Bereitstellen von Werbung für Insassen eines Kraftfahrzeugs sind in US 2012/0054028 A1 und EP 2 0420 964 A2 offenbart.

JP 2007-249567 A, DE 10 2014 109 079 A1, WO 2019/020564 A1 und EP 2 450 845 A1 offenbaren die Erfassung und Auswertung einer Blickrichtung von Verkehrsteilnehmern in Zusammenhang mit einer Anzeige von Inhalten.

Diese Aufgabe wird durch ein Verfahren mit den Merkmalen des Anspruchs 1, durch ein computerlesbares Speichermedium mit Instruktionen gemäß Anspruch 8 und durch eine Vorrichtung mit den Merkmalen des Anspruchs 9 gelöst. Bevorzugte Ausgestaltungen der Erfindung sind Gegenstand der abhängigen Ansprüche.

Der Begriff Computer ist dabei breit zu verstehen. Insbesondere umfasst er auch Workstations, verteilte Systeme und andere prozessorbasierte Datenverarbeitungsvorrichtungen.

Fahrzeughersteller bieten zunehmend Kundenportale an, in denen Kunden sich und ihre Kraftfahrzeuge registrieren sowie gegebenenfalls zusätzliche Informationen einpflegen. Mit Hilfe solcher Kundenportale kann ein umfangreiches Wissen über Merkmale und Interessen der Kunden aufgebaut werden. Dieses Wissen lässt sich auf vielfältig nutzen, sofern der Kunde der Verwendung der Daten zustimmt. Erfindungsgemäß werden das Wissen über den Kunden bzw. die Fahrzeuginsassen sowie Informationen über die Fahrstrecke, aus denen sich Positionen des Kraftfahrzeugs prädizieren lassen, zusammengebracht, um zielgerichtet Inhalte anzuzeigen. Die Inhalte können insbesondere Werbung umfassen, die somit angepasst an den Kunden am richtigen Ort und zur passenden Zeit geschaltet werden kann. Die verfügbaren Informationen über die Fahrstrecke ermöglichen es, die anzuzeigenden Inhalte frühzeitig an die entsprechenden Anzeigevorrichtungen zu übermitteln. Somit wird sichergestellt, dass die für die Anzeige der gewünschten Inhalte erforderlichen Daten rechtzeitig zur Verfügung stehen. Vor allem für die Anzeige von Videosequenzen müssen oftmals große Datenmengen übertragen werden, wofür ohne die Prädiktion der Positionen des Kraftfahrzeugs unter Umständen keine ausreichende Zeit zur Verfügung stünde. Erfindungsgemäß werden Informationen zu einer Blickrichtung des Insassen des Kraftfahrzeugs durch das Backend empfangen. In zukünftigen Kraftfahrzeugen werden zunehmend Kameras zur Fahrerbeobachtung bzw. zur Innenraumüberwachung verbaut werden. Mit Hilfe dieser Kameras können Blickrichtungen der Fahrzeuginsassen bestimmt werden. Die Informationen über die Blickrichtungen können für unterschiedliche Zwecke genutzt werden. Beispielsweise kann durch das Backend anhand der empfangenen Informationen zur Blickrichtung des Insassen des Kraftfahrzeugs eine konkrete Anzeigevorrichtung für die Anzeige der anzuzeigenden Inhalte bestimmt werden. Oftmals sind mehrere Anzeigevorrichtungen benachbart angrenzend an eine Straße angeordnet. Anhand der Blickrichtung kann in einem solchen Fall bestimmt werden, welche der benachbarten Anzeigevorrichtungen der Insasse tatsächlich betrachtet, so dass die Anzeige auf dieser Anzeigevorrichtung erfolgen kann. Die Informationen zur Blickrichtung werden außerdem statistisch ausgewertet. So wird ermittelt, welche Anzeigevorrichtungen entlang einer wiederholt zurückgelegten Strecke ein Fahrzeuginsasse üblicherweise betrachtet.

Gemäß einem Aspekt der Erfindung werden die anzuzeigenden Inhalte auf Basis von Informationen zu zwei oder mehr Insassen bestimmt. Alternativ oder zusätzlich können die anzuzeigenden Inhalte auf Basis von Informationen zu Fahrstrecken von zwei oder mehr Kraftfahrzeugen bestimmt werden. Oftmals befindet sich mehr als ein Insasse in einem Kraftfahrzeug, bzw. passieren zwei oder mehr Kraftfahrzeuge nahezu gleichzeitig eine Anzeigevorrichtung. In solchen Fällen kann es sinnvoll sein, die anzuzeigenden Inhalte an mehrere oder sogar alle betroffenen Insassen anzupassen. Dazu kann beispielweise ermittelt werden, ob es Übereinstimmungen bei den Interessen oder sonstigen Merkmalen der Insassen gibt. Bei gemeinsamen Interessen können die anzuzeigenden Inhalte direkt auf diese gemeinsamen Interessen abgestimmt werden. Ist z.B. bekannt, dass sich alle betroffenen Insassen für Sport interessieren, können die anzuzeigenden Inhalte auf eine bevorstehende Sportveranstaltung oder einen Anbieter von Sportartikeln hinweisen. Gibt es Übereinstimmungen bei anderen Merkmalen, z.B. bei Alter, Geschlecht, Einkommen, persönlicher Situation, etc., so können anzuzeigende Inhalte bestimmt werden, zu deren Zielgruppe das übereinstimmende Merkmal passt. So kann ein Werbekunde beispielsweise festlegen, dass die Zielgruppe seiner Werbeanzeige vorrangig Frauen sind. In diesem Fall könnte die Werbeanzeige angezeigt werden, wenn sich ausschließlich oder überwiegend Frauen unter den betroffenen Insassen befinden. Alternativ kann die Bestimmung der anzuzeigenden Inhalte auch unter Berücksichtigung unterschiedlicher Prioritäten erfolgen. Beispielsweise können die Fahrer vorrangig gegenüber anderen Fahrzeuginsassen berücksichtigt werden. Ebenso können die Anbieter der anzuzeigenden Inhalte eine Rangfolge der Inhalte vorgeben oder ihrerseits vom Betreiber der Anzeigevorrichtung unterschiedlich priorisiert werden.

Gemäß einem Aspekt der Erfindung werden die Informationen zu einer Fahrstrecke eines Kraftfahrzeugs von einer Navigationseinrichtung des Kraftfahrzeugs bereitgestellt oder aus einem Fahrtenprofil des Kraftfahrzeugs oder des Insassen des Kraftfahrzeugs ermittelt. Die Bereitstellung durch die Navigationseinrichtung hat den Vorteil, dass die bereitgestellten Informationen sehr genau sind und die anzuzeigenden Inhalte daher sehr zielgerichtet hinsichtlich Zeitpunkt und Ort der Anzeige bestimmt werden können. Da zukünftige Kraftfahrzeuge oftmals eine Datenanbindung an ein Backend besitzen werden, ist eine Bereitstellung der Informationen durch die Navigationseinrichtung ohne größeren Aufwand realisierbar. Die Ermittlung der Informationen aus dem Fahrtenprofil ist zwar weniger genau, oftmals aber ausreichend für die Bestimmung der anzuzeigenden Inhalte. Gleichzeitig ist keine Datenanbindung des Kraftfahrzeugs erforderlich. Insbesondere Fahrten zwischen Wohnort und Arbeitsstätte erfolgen typischerweise entlang der gleichen Fahrstrecke und zu regelmäßigen Zeiten.

Gemäß einem Aspekt der Erfindung stellt die Navigationseinrichtung zumindest eine der folgenden Informationen zur Fahrstrecke des Kraftfahrzeugs bereit: eine geplante Route, eine aktuelle Position oder eine Angabe zu zumindest einer Anzeigevorrichtung an der Fahrstrecke. Die geplante Route erlaubt unmittelbar eine Bestimmung, welche Anzeigevorrichtungen zu welcher Zeit passiert werden. Dabei kann außerdem das Ziel der Route bei der Bestimmung der anzuzeigenden Inhalte berücksichtigt werden. Beispielsweise können bei der Fahrt zu einem Urlaubsort bereits entlang der Fahrstrecke Hinweise auf Veranstaltungen oder bestimmte Ziele am Zielort, wie Restaurants oder Geschäfte, gegeben werden. Aus der aktuellen Position oder der zeitlichen Abfolge der empfangenen Positionen können ebenfalls Rückschlüsse auf die Fahrstrecke gezogen werden, aus denen sich bestimmen lässt, auf welcher Anzeigevorrichtung und zu welchem Zeitpunkt die bestimmten Inhalte angezeigt werden sollen. Gleichzeitig werden seitens des Kraftfahrzeugs weniger sensible Daten übermittelt. Sind dem Kraftfahrzeug oder einem Backend des Herstellers des Kraftfahrzeugs die Standorte von Anzeigevorrichtungen bekannt, so reicht es zur Umsetzung der Lösung auch aus, lediglich eine Angabe zu übermitteln, auf welcher Anzeigevorrichtung und gegebenenfalls zu welchem Zeitpunkt eine Anzeige erfolgen soll. Auf diese Weise wird die Menge der zu übermittelnden Daten weiter verringert.

Gemäß einem Aspekt der Erfindung wird durch das Backend anhand der empfangenen Informationen zur Blickrichtung des Insassen des Kraftfahrzeugs eine Relevanz der angezeigten Inhalte oder der Anzeigevorrichtung für den Insassen des Kraftfahrzeugs ermittelt. Die Informationen zur Blickrichtung können mit externem Wissen über Standorte von Anzeigevorrichtungen abgeglichen werden, um eine Aussage zu treffen, mit welcher Wahrscheinlichkeit und wie lange ein Fahrzeuginsasse die entsprechende Anzeigevorrichtung bzw. die angezeigten Inhalte auch wirklich angeschaut hat. Die durch eine Vielzahl von mit dieser Technik ausgestatteten Fahrzeugen gewonnenen Informationen können, vorzugsweise anonymisiert, in einem Backend gespeichert und ausgewertet werden. Auf diese Weise kann eine umfassende Statistik über die Relevanz spezifischer Anzeigevorrichtungen und Inhalte erstellt werden.

Nicht unter die beanspruchte Erfindung fallend ist ein Kraftfahrzeug mit einer Navigationseinrichtung und einer Vorrichtung zur Überwachung eines Insassen dazu eingerichtet, Informationen zu einer Fahrstrecke oder zu einer Blickrichtung des Insassen für eine Vorrichtung zum Bereitstellen von Inhalten zur Anzeige für den Insassen des Kraftfahrzeugs bereitzustellen.

Ein derartig ausgestaltetes Kraftfahrzeug ist ideal dazu geeignet, in Verbindung mit dem beschriebenen Verfahren bzw. der beschriebenen Vorrichtung genutzt zu werden.

Weitere Merkmale der vorliegenden Erfindung werden aus der nachfolgenden Beschreibung und den angehängten Ansprüchen in Verbindung mit den Figuren ersichtlich.
- Fig. 1: zeigt schematisch ein Verfahren zum Bereitstellen von Inhalten zur Anzeige für einen Insassen eines Kraftfahrzeugs;
- Fig. 2: zeigt eine erste Ausführungsform einer Vorrichtung zum Bereitstellen von Inhalten zur Anzeige für einen Insassen eines Kraftfahrzeugs;
- Fig. 3: zeigt eine zweite Ausführungsform einer Vorrichtung zum Bereitstellen von Inhalten zur Anzeige für einen Insassen eines Kraftfahrzeugs;
- Fig. 4: stellt schematisch ein Kraftfahrzeug dar, das in Verbindung mit der erfindungsgemäßen Lösung genutzt werden kann;
- Fig. 5: zeigt schematisch ein Systemdiagramm einer ersten Umsetzung der erfindungsgemäßen Lösung; und
- Fig. 6: zeigt schematisch ein Systemdiagramm einer zweiten Umsetzung der erfindungsgemäßen Lösung.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

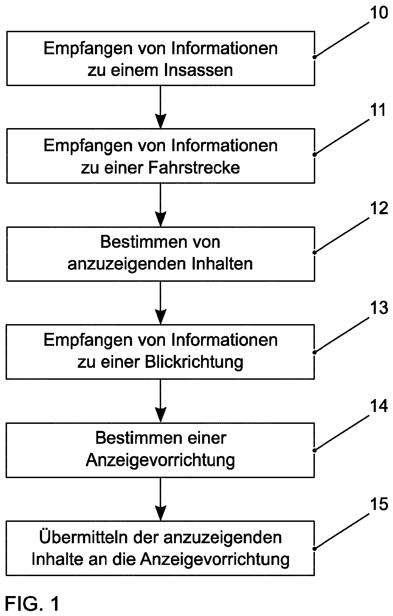

Fig. 1 zeigt schematisch ein Verfahren zum Bereitstellen von Inhalten zur Anzeige für einen Insassen eines Kraftfahrzeugs. In einem ersten Schritt werden Informationen zum Insassen empfangen 10. Außerdem werden Informationen zu einer Fahrstrecke des Kraftfahrzeugs empfangen 11. Diese können beispielsweise von einer Navigationseinrichtung des Kraftfahrzeugs bereitgestellt werden oder aus einem Fahrtenprofil des Kraftfahrzeugs oder des Insassen des Kraftfahrzeugs ermittelt werden. Z.B. kann die Navigationseinrichtung Angaben zu einer geplanten Route oder zu einer aktuellen Position des Kraftfahrzeugs zur Verfügung stellen. Die Navigationseinrichtung kann aber auch eine Angabe zu einem relevanten Punkt an der Fahrstrecke liefern, z.B. die Angabe einer Anzeigevorrichtung, die zu einem späteren Zeitpunkt vom Kraftfahrzeug passiert werden wird. Vorzugsweise umfassen die Informationen auch Zeitangaben, z.B. den voraussichtlichen Zeitpunkt des Passierens der Anzeigevorrichtung. Auf Basis der empfangenen Informationen werden daraufhin anzuzeigende Inhalte für den Insassen bestimmt 12. Dabei können auch Informationen zu zwei oder mehr Insassen sowie die Fahrstrecken von zwei oder mehr Kraftfahrzeugen berücksichtigt werden. Zudem werden Informationen zu einer Blickrichtung des Insassen des Kraftfahrzeugs empfangen 13. Diese Informationen zur Blickrichtung können genutzt werden, um eine Anzeigevorrichtung für die Anzeige der anzuzeigenden Inhalte zu bestimmen 14. Dies ist insbesondere dann sinnvoll, wenn potenziell mehrere Anzeigevorrichtung für die Anzeige infrage kommen. Die anzuzeigenden Inhalte werden schließlich an zumindest eine Anzeigevorrichtung an der Fahrstrecke des Kraftfahrzeugs übermittelt 15. Aus den Informationen zur Blickrichtung kann zudem auch eine Relevanz der angezeigten Inhalte oder der Anzeigevorrichtung für den Insassen des Kraftfahrzeugs ermittelt werden.

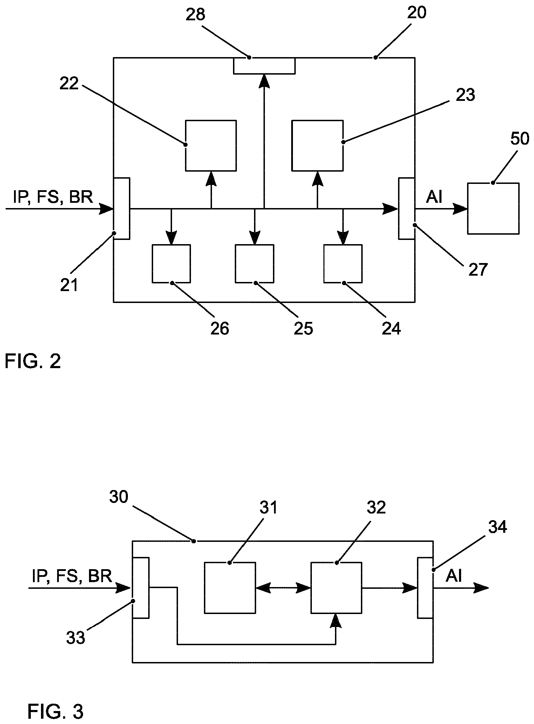

Fig. 2 zeigt eine vereinfachte schematische Darstellung einer ersten Ausführungsform einer Vorrichtung 20 zum Bereitstellen von Inhalten zur Anzeige für einen Insassen eines Kraftfahrzeugs. Die Vorrichtung 20 hat einen Eingang 21, über den mittels eines Empfangsmoduls 22 beispielsweise Informationen zum Insassen IP und Informationen zu einer Fahrstrecke FS des Kraftfahrzeugs empfangen werden können. Die Informationen zur Fahrstrecke können beispielsweise von einer Navigationseinrichtung des Kraftfahrzeugs bereitgestellt werden oder aus einem Fahrtenprofil des Kraftfahrzeugs oder des Insassen des Kraftfahrzeugs ermittelt werden. Z.B. kann die Navigationseinrichtung Angaben zu einer geplanten Route oder zu einer aktuellen Position des Kraftfahrzeugs zur Verfügung stellen. Die Navigationseinrichtung kann aber auch eine Angabe zu einem relevanten Punkt an der Fahrstrecke liefern, z.B. die Angabe einer Anzeigevorrichtung, die vom Kraftfahrzeug passiert werden wird. Vorzugsweise umfassen die Informationen auch Zeitangaben, z.B. den voraussichtlichen Zeitpunkt des Passierens der Anzeigevorrichtung. Die Vorrichtung 20 hat zudem ein Auswertemodul 23 zum Bestimmen von anzuzeigenden Inhalten für den Insassen. Dabei kann das Auswertemodul 23 auch Informationen zu zwei oder mehr Insassen IP sowie die Fahrstrecken FS von zwei oder mehr Kraftfahrzeugen berücksichtigen. Zudem werden Informationen zu einer Blickrichtung BR des Insassen des Kraftfahrzeugs empfangen. Diese Informationen zur Blickrichtung BR können vom Auswertemodul 23 genutzt werden, um eine Anzeigevorrichtung für die Anzeige der anzuzeigenden Inhalte zu bestimmen. Über einen Ausgang 27 der Vorrichtung 20 übermittelt ein Übermittlungsmodul 24 die anzuzeigenden Inhalte AI an zumindest eine Anzeigevorrichtung 50 an der Fahrstrecke des Kraftfahrzeugs. Aus den Informationen zur Blickrichtung BR kann das Auswertemodul 23 zudem auch eine Relevanz der angezeigten Inhalte oder der Anzeigevorrichtung für den Insassen des Kraftfahrzeugs ermitteln.

Das Empfangsmodul 22, das Auswertemodul 23 und das Übermittlungsmodul 24 können von einer Kontrolleinheit 25 gesteuert werden. Über eine Benutzerschnittstelle 28 können gegebenenfalls Einstellungen des Empfangsmoduls 22, des Auswertemoduls 23, des Übermittlungsmoduls 24 oder der Kontrolleinheit 25 geändert werden. Die in der Vorrichtung 20 anfallenden Daten können bei Bedarf in einem Speicher 26 der Vorrichtung 20 abgelegt werden, beispielsweise für eine spätere Auswertung oder für eine Nutzung durch die Komponenten der Vorrichtung 20. In dem Speicher 26 können zudem die anzuzeigenden Inhalte vorgehalten werden. Das Empfangsmodul 22, das Auswertemodul 23, das Übermittlungsmodul 24 sowie die Kontrolleinheit 25 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU oder einer CPU. Der Eingang 21 und der Ausgang 27 können als getrennte Schnittstellen oder als eine kombinierte bidirektionale Schnittstelle implementiert sein. I

Fig. 3 zeigt eine vereinfachte schematische Darstellung einer zweiten Ausführungsform einer Vorrichtung 30 zum Bereitstellen von Inhalten zur Anzeige für einen Insassen eines Kraftfahrzeugs. Die Vorrichtung 30 weist einen Prozessor 32 und einen Speicher 31 auf. Beispielsweise handelt es sich bei der Vorrichtung 30 um einen Computer oder ein Steuergerät. Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung 30 hat einen Eingang 33 zum Empfangen von Informationen, insbesondere von Informationen zum Insassen IP, zu einer Fahrstrecke FS des Kraftfahrzeugs und zu einer Blickrichtung BR des Insassen. Vom Prozessor 32 generierte Daten, insbesondere zu den anzuzeigenden Inhalten AI, werden über einen Ausgang 34 bereitgestellt. Darüber hinaus können sie im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 26, 31 der beschriebenen Ausführungsformen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

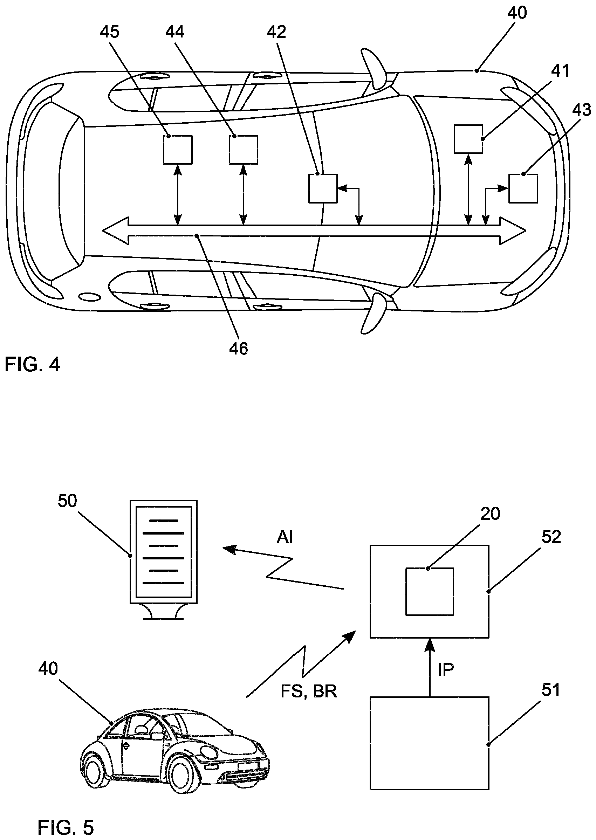

Fig. 4 stellt schematisch ein Kraftfahrzeug 40 dar, in dem eine erfindungsgemäße Lösung realisiert ist. Das Kraftfahrzeug 40 weist eine Navigationseinrichtung 41 auf, die dazu eingerichtet ist, Informationen zu einer Fahrstrecke des Kraftfahrzeugs 40 bereitzustellen. Dabei kann es sich beispielsweise um Angaben zu einer geplanten Route oder um eine aktuelle Position des Kraftfahrzeugs 40 handeln. Die Informationen zur Fahrstrecke können auch in einer Angabe zu einem relevanten Punkt an der Fahrstrecke bestehen, z.B. der Angabe einer Anzeigevorrichtung, die vom Kraftfahrzeug passiert werden wird.

Vorzugsweise umfassen die Informationen auch Zeitangaben, z.B. den voraussichtlichen Zeitpunkt des Passierens der Anzeigevorrichtung. Außerdem ist eine Kamera 42 zur Innenraumüberwachung vorgesehen, durch die unter anderem eine Blickrichtung zumindest eines Fahrzeuginsassen bestimmt werden kann. Weitere Komponenten des Kraftfahrzeugs 40 sind eine Umgebungssensorik 43 zur Umgebungserfassung sowie eine Datenübertragungseinheit 44. Mittels der Datenübertragungseinheit 44 kann eine Verbindung zu Dienstanbietern aufgebaut werden, beispielsweise zum Übermitteln der Informationen zur Fahrstrecke oder der Blickrichtung des Fahrzeuginsassen. Zur Speicherung von Daten ist ein Speicher 45 vorhanden. Der Datenaustausch zwischen den verschiedenen Komponenten des Kraftfahrzeugs 40 erfolgt über ein Netzwerk 46.

Fig. 5 zeigt schematisch ein Systemdiagramm einer ersten Umsetzung der erfindungsgemäßen Lösung. Bei dieser Umsetzung werden durch ein Backend 51 des Fahrzeugherstellers lediglich Informationen über einen Insassen IP eines Kraftfahrzeugs 40 an ein Backend 52 eines Betreibers einer Anzeigevorrichtung 50 übermittelt. Informationen zur Fahrstrecke FS des Kraftfahrzeugs 40 sowie Informationen zur Blickrichtung BR des Fahrzeuginsassen werden vom Kraftfahrzeug 40 direkt an das Backend 52 des Betreibers der Anzeigevorrichtung 50 übermittelt. In diesem Backend werden die empfangenen Informationen IP, FS, BR durch eine Vorrichtung 20 zum Bereitstellen von Inhalten verarbeitet, um die anzuzeigenden Inhalte AI zu bestimmen. Zudem erfolgt auch eine statistische Auswertung der Informationen. Die anzuzeigenden Inhalte werden vom Backend 52 dann über eine drahtlose oder auch drahtgebundene Datenverbindung an die Anzeigevorrichtung 50 übermittelt. Ein Vorteil dieser Umsetzung besteht darin, dass durch das Backend 51 des Fahrzeugherstellers nur geringe Datenmengen bereitgestellt werden müssen.

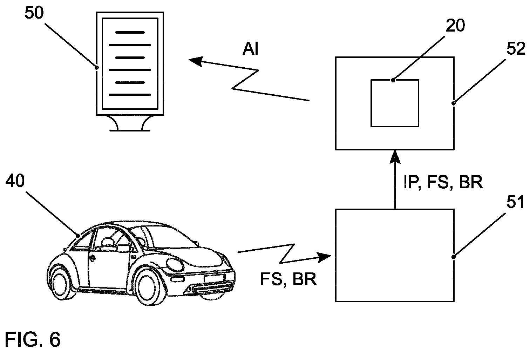

Fig. 6 zeigt schematisch ein Systemdiagramm einer zweiten Umsetzung der erfindungsgemäßen Lösung. Bei dieser Umsetzung werden die Informationen zur Fahrstrecke FS des Kraftfahrzeugs 40 sowie die Informationen zur Blickrichtung BR des Fahrzeuginsassen vom Kraftfahrzeug 40 an das Backend 51 des Fahrzeugherstellers übermittelt. Durch das Backend 51 des Fahrzeugherstellers werden dann sowohl die Informationen über den Insassen IP des Kraftfahrzeugs 40 als auch Informationen zur Fahrstrecke FS und zur Blickrichtung BR an das Backend 52 des Betreibers der Anzeigevorrichtung 50 übermittelt. Dort werden die empfangenen Informationen IP, FS, BR wie gehabt verarbeitet, um die anzuzeigenden Inhalte AI zu bestimmen und an die Anzeigevorrichtung 50 zu übermitteln. Ein Vorteil dieser Umsetzung ist, dass an das Backend 52 des Betreibers der Anzeigevorrichtung 50 alle Informationen in anonymisierter Form übermittelt werden können.

### Bezugszeichenliste

- 10: Empfangen von Informationen zu einem Insassen
- 11: Empfangen von Informationen zu einer Fahrstrecke
- 12: Bestimmen von anzuzeigenden Inhalten
- 13: Empfangen von Informationen zu einer Blickrichtung
- 14: Bestimmen einer Anzeigevorrichtung
- 15: Übermitteln der anzuzeigenden Inhalte an die Anzeigevorrichtung
- 20: Vorrichtung
- 21: Eingang
- 22: Empfangsmodul
- 23: Auswertemodul
- 24: Übermittlungsmodul
- 25: Kontrolleinheit
- 26: Speicher
- 27: Ausgang
- 28: Benutzerschnittstelle
- 30: Vorrichtung
- 31: Speicher
- 32: Prozessor
- 33: Eingang
- 34: Ausgang
- 40: Kraftfahrzeug
- 41: Navigationseinrichtung
- 42: Kamera
- 43: Umgebungssensorik
- 44: Datenübertragungseinheit
- 45: Speicher
- 46: Netzwerk
- 50: Anzeigevorrichtung
- 51: Backend des Fahrzeugherstellers
- 52: Backend des Betreibers der Anzeigevorrichtung
- AI: Anzuzeigende Inhalte
- BR: Informationen zur Blickrichtung
- FS: Informationen zur Fahrstrecke
- IP: Informationen zum Insassen

## Patentansprüche

1. Verfahren zum Bereitstellen von Inhalten (AI) zur Anzeige für einen Insassen eines Kraftfahrzeugs (40), mit den Schritten:
- Empfangen (10) von Informationen zum Insassen (IP) durch ein Backend (52);
- Empfangen (11) von Informationen zu einer Fahrstrecke (FS) des Kraftfahrzeugs (40) durch das Backend (52);
- Bestimmen (12) von anzuzeigenden Inhalten (AI) für den Insassen auf Grundlage der Informationen zum Insassen (IP) und der Informationen zur Fahrstrecke (FS) des Kraftfahrzeugs (40) durch das Backend (52); und
- Übermitteln (15) der für die anzuzeigenden Inhalte (AI) erforderlichen Bilddaten oder Videodaten durch das Backend (52) an zumindest eine vom Backend (52) getrennte Anzeigevorrichtung (50) an der Fahrstrecke des Kraftfahrzeugs (40);
**gekennzeichnet durch**:
- Empfangen (13) von Informationen zu einer Blickrichtung (BR) des Insassen des Kraftfahrzeugs (40) durch das Backend (52), wobei die Informationen zur Blickrichtung (BR) statistisch ausgewertet werden, um von einem Fahrzeuginsassen entlang einer wiederholt zurückgelegten Fahrstrecke (FS) üblicherweise betrachtete Anzeigevorrichtungen (50) zu ermitteln.

2. Verfahren gemäß Anspruch 1, wobei die anzuzeigenden Inhalte (AI) auf Basis von Informationen (IP) zu zwei oder mehr Insassen bestimmt werden (12).

3. Verfahren gemäß Anspruch 1 oder 2, wobei die anzuzeigenden Inhalte (AI) auf Basis von Informationen (FS) zu Fahrstrecken von zwei oder mehr Kraftfahrzeugen (40) bestimmt werden (12).

4. Verfahren gemäß einem der vorherigen Ansprüche, wobei die Informationen zur Fahrstrecke (FS) des Kraftfahrzeugs (40) von einer Navigationseinrichtung (41) des Kraftfahrzeugs (40) bereitgestellt werden oder aus einem Fahrtenprofil des Kraftfahrzeugs (40) oder des Insassen des Kraftfahrzeugs (40) ermittelt werden.

5. Verfahren gemäß Anspruch 4, wobei die Navigationseinrichtung (41) zumindest eine der folgenden Informationen zur Fahrstrecke (FS) des Kraftfahrzeugs (40) bereitstellt:
eine geplante Route, eine aktuelle Position oder eine Angabe zu zumindest einer Anzeigevorrichtung (50) an der Fahrstrecke.

6. Verfahren gemäß einem der Ansprüche 1 bis 5, wobei durch das Backend (52) anhand der empfangenen Informationen zur Blickrichtung (BR) des Insassen des Kraftfahrzeugs (40) eine Anzeigevorrichtung (50) für die Anzeige der anzuzeigenden Inhalte (AI) bestimmt wird (14).

7. Verfahren gemäß einem der Ansprüche 1 bis 5, wobei durch das Backend (52) anhand der empfangenen Informationen zur Blickrichtung (BR) des Insassen des Kraftfahrzeugs (40) eine Relevanz der angezeigten Inhalte oder der Anzeigevorrichtung (50) für den Insassen des Kraftfahrzeugs (40) ermittelt wird.

8. Computerlesbares Speichermedium mit Instruktionen, die bei Ausführung durch einen Computer den Computer zur Ausführung der Schritte eines Verfahrens gemäß einem der Ansprüche 1 bis 7 zum Bereitstellen von Inhalten zur Anzeige für einen Insassen eines Kraftfahrzeugs (40) veranlassen.

9. Vorrichtung (20) zum Bereitstellen von Inhalten (AI) zur Anzeige für einen Insassen eines Kraftfahrzeugs (40), mit
- einem Empfangsmodul (22) zum Empfangen (10) von Informationen zum Insassen (IP) und zum Empfangen (11) von Informationen zu einer Fahrstrecke (FS) des Kraftfahrzeugs (40);
- einem Auswertemodul (23) zum Bestimmen (12) von anzuzeigenden Inhalten (AI) für den Insassen auf Grundlage der Informationen zum Insassen (IP) und der Informationen zur Fahrstrecke (FS) des Kraftfahrzeugs (40); und
- einem Übermittlungsmodul (24) zum Übermitteln (15) der für die anzuzeigenden Inhalte (AI) erforderlichen Bilddaten oder Videodaten an zumindest eine von der Vorrichtung (20) getrennte Anzeigevorrichtung (50) an der Fahrstrecke des Kraftfahrzeugs (40);
**dadurch gekennzeichnet, dass** das Empfangsmodul (22) eingerichtet ist, Informationen zu einer Blickrichtung (BR) des Insassen des Kraftfahrzeugs (40) zu empfangen (13), und das Auswertemodul (23) eingerichtet ist, die Informationen zur Blickrichtung (BR) statistisch auszuwerten, um von einem Fahrzeuginsassen entlang einer wiederholt zurückgelegten Fahrstrecke (FS) üblicherweise betrachtete Anzeigevorrichtungen (50) zu ermitteln.

## Claims

1. Method for providing content (Al) to display for a passenger of a motor vehicle (40), comprising the steps of:
- receiving (10) information through a backend (52) regarding the passenger (IP);
- receiving (11) information through the backend (52) regarding a route (FS) of the motor vehicle (40);
- determining (12) content (Al) to be displayed for the passenger on the basis of the information through the backend (52) regarding the passenger (IP) and the information regarding the route (FS) of the motor vehicle (40); and
- transmitting (15) through the backend (52) the image data or video data required for the content (Al) to be displayed to at least one display device (50) separate from the backend (52) on the route of the motor vehicle (40);
**characterized by:**
- receiving (13) information through the backend (52) regarding a viewing direction (BR) of the passenger of the motor vehicle (40), wherein the information regarding the viewing direction (BR) is statistically evaluated, in order to determine display devices (50) that are usually viewed by a vehicle passenger along a repeatedly traveled route (FS).

2. Method according to Claim 1, wherein the content (Al) to be displayed is determined (12) on the basis of information (IP) regarding two or more passengers.

3. Method according to Claims 1 or 2, wherein the content (Al) to be displayed is determined on the basis of information (FS) regarding routes of two or more motor vehicles (40) (12).

4. Method according to any one of the preceding claims, wherein the information regarding the route (FS) of the motor vehicle (40) is provided by a navigation device (41) of the motor vehicle (40) or is determined from a route profile of the motor vehicle (40) or of the passenger of the motor vehicle (40).

5. Method according to Claim 4, wherein the navigation device (41) provides at least one of the following items of information regarding the route (FS) of the motor vehicle (40): a planned route, a current position or an indication of at least one display device (50) on the route.

6. Method according to any one of Claims 1 to 5, wherein a display device (50) for displaying the content (Al) to be displayed is determined (14) by the backend (52) based on the received information regarding the viewing direction (BR) of the passenger of the motor vehicle (40).

7. Method according to any one of Claims 1 to 5, wherein a relevance of the displayed content or of the display device (50) for the passenger of the motor vehicle (40) is determined by the backend (52) based on the received information regarding the viewing direction (BR) of the passenger of the motor vehicle (40).

8. Computer-readable storage medium having instructions that, when executed by a computer, cause the computer to perform the steps of a method according to any one of Claims 1 to 7 for providing content for display to a passenger of a motor vehicle (40).

9. Device (20) for providing content (Al) for display for a passenger of a motor vehicle (40), with
- a receiving module (22) for receiving (10) information regarding the passenger (IP) and for receiving (11) information regarding a route (FS) of the motor vehicle (40);
- an evaluation module (23) for determining (12) content (Al) to be displayed for the passenger on the basis of the information regarding the passenger (IP) and information regarding the route (FS) of the motor vehicle (40); and
- a transmission module (24) for transmitting (15) the image data or video data required for the content (Al) to be displayed to at least one display device (50) separate from the device (20) on the route of the motor vehicle (40);
**characterized in that** the receiving module (22) is configured to receive (13) information regarding a viewing direction (BR) of the passenger of the motor vehicle (40), and the evaluation module (23) is configured to statistically evaluate the information regarding the viewing direction (BR), in order to determine display devices (50) that are usually viewed by a vehicle passenger along a repeatedly traveled route (FS).

## Revendications

1. Procédé pour la fourniture de contenus (AI) destinés à l'affichage pour un passager d'un véhicule automobile (40), comprenant les étapes :
- de réception (10) d'informations concernant le passager (IP) par un backend (52) ;
- de réception (11) d'informations concernant un trajet (FS) du véhicule automobile (40) par le backend (52) ;
- de détermination (12) de contenus (AI) à afficher pour le passager sur la base des informations concernant le passager (IP) et des informations concernant le trajet (FS) du véhicule automobile (40) par le backend (52) ; et
- de transmission (15) des données d'images ou des données vidéo nécessaires pour les contenus (AI) à afficher par le backend (52) à au moins un dispositif d'affichage (50) séparé du backend (52) sur le trajet du véhicule automobile (40) ;
**caractérisé par** :
- la réception (13) d'informations concernant une direction du regard (BR) du passager du véhicule automobile (40) par le backend (52), les informations concernant la direction du regard (BR) étant évaluées statistiquement, pour déterminer les dispositifs d'affichage (50) normalement regardés par un passager du véhicule le long d'un trajet (FS) parcouru répétitivement.

2. Procédé selon la revendication 1, dans lequel les contenus (AI) à afficher sont déterminés (12) sur la base d'informations (IP) concernant deux ou plusieurs passagers.

3. Procédé selon la revendication 1 ou 2, dans lequel les contenus (AI) à afficher sont déterminés (12) sur la base d'informations (FS) concernant des trajets de deux ou plusieurs véhicules automobiles (40).

4. Procédé selon l'une quelconque des revendications précédentes, dans lequel les informations concernant le trajet (FS) du véhicule automobile (40) sont fournies par un dispositif de navigation (41) du véhicule automobile (40) ou sont déterminées à partir d'un profil de trajets du véhicule automobile (40) ou du passager du véhicule automobile (40).

5. Procédé selon la revendication 4, dans lequel le dispositif de navigation (41) fournit au moins une des informations suivantes concernant le trajet (FS) du véhicule automobile (40) : un itinéraire planifié, une position actuelle ou une indication à au moins un dispositif d'affichage (50) sur le trajet.

6. Procédé selon l'une quelconque des revendications 1 à 5, dans lequel un dispositif d'affichage (50) pour l'affichage des contenus (AI) à afficher est déterminé (14) par le backend (52) sur la base des informations reçues concernant la direction du regard (BR) du passager du véhicule automobile (40).

7. Procédé selon l'une quelconque des revendications 1 à 5, dans lequel une pertinence des contenus à afficher ou du dispositif d'affichage (50) pour le passager du véhicule automobile (40) est déterminée par le backend (52) sur la base des informations reçues concernant la direction du regard (BR) du passager du véhicule automobile (40).

8. Support d'enregistrement lisible par ordinateur doté d'instructions qui, lorsqu'elles sont exécutées par un ordinateur, amènent l'ordinateur à exécuter les étapes d'un procédé selon l'une quelconque des revendications 1 à 7 pour la fourniture de contenus destinés à l'affichage pour un passager d'un véhicule automobile (40).

9. Dispositif (20) pour la fourniture de contenus (AI) destinés à l'affichage pour un passager d'un véhicule automobile (40), comprenant :
- un module de réception (22) pour la réception (10) d'informations concernant un passage (IP) et pour la réception (11) d'informations concernant un trajet (FS) du véhicule automobile (40) ;
- un module d'évaluation (23) pour la détermination (12) de contenus (AI) à afficher pour le passager sur la base des informations concernant le passager (IP) et des informations concernant le trajet (FS) du véhicule automobile (40) ; et
- un module de transmission (24) pour la transmission (15) des données d'images ou des données vidéo nécessaires pour les contenus (AI) séparé du dispositif (20) à au moins un dispositif d'affichage (50) sur le trajet du véhicule automobile (40) ;
**caractérisé en ce que** le module de réception (22) est configuré pour recevoir (13) des informations concernant une direction du regard (BR) du passager du véhicule automobile (40) et le module d'évaluation (23) est configuré pour évaluer statistiquement les informations concernant la direction du regard (BR), afin de déterminer les dispositifs d'affichage (50) habituellement regardés par un passager du véhicule le long d'un trajet (FS) parcouru répétitivement.
